# EUROPEAN PATENT SPECIFICATION

(11) **EP 1 179 276 B1**
(45) Date of publication and mention of the grant of the patent: **23.03.2011**
(21) Application number: 00926836.8
(22) Date of filing: 07.04.2000
(51) Int. Cl.: H04W 8/02

(54) **COMMUNICATIONS SYSTEM HAVING ROAMING FACILITIES**
KOMMUNIKATIONSSYSTEM MIT ROAMINGMÖGLICHKEIT
SYSTEME DE COMMUNICATION POURVU D'INSTALLATIONS POUR ABONNES ITINERANTS

(30) Priority: 07.05.1999 NL 1011987
(43) Date of publication of application: 13.02.2002
(73) Proprietor: Stratos Investments BV, Bethesda, MD 20817 (US)
(72) Inventor: NAS, Deborah, Nicole, NL-3188 RP Schiedam (NL); KAZEM, Mohammed, Ismael, NL-2586 BW Den Haag (NL)
(74) Representative: Skone James, Robert Edmund
(86) International application number: PCT/EP2000/003096
(87) International publication number: WO 2000/069200

(56) References cited:
- EP-A- 0 048 868
- EP-A- 0 512 962
- EP-A- 0 909 104
- WO-A-97/36447
- GB-A- 2 322 998

## Description

### BACKGROUND OF THE INVENTION

The invention relates to a communications system, comprising several communications networks, and means for facilitating roaming for users on said several communications networks.

It is known that PLMN operators (PLMN = Public Land Mobile Network) mutually conclude roaming agreements. Such agreements, which regulate that subscribers of one PLMN may, and can, make use of another PLMN (this is called roaming) so far must always be gone into bilaterally between the several PLMN operators mutually. In addition, technical provisions which make all this possible, such as coupling network signallings, must be undertaken bilaterally. In this manner, roaming additionally is possible only between different PLMNs, but not between PLMNs and PSTNs (= Public Switched Telephone Networks).

WO-A-97/36447 describes a system for interconnecting mobile networks having non-compatible standards.

GB-A-2322998 describes a method of interconnecting communication networks in which an international roaming platform is used to check that a visited network and the home network of a subscriber have concluded servile agreements with it. The international roaming platform also passes authentication data to the visited network following which calls are connected directly between the networks in a conventional manner. In this system, each network has to be aware that a subscriber network has a service agreement with the international roaming platform while the international roaming platform carries out additional checks when it receives an interrogation signal from one of the networks. This leads to a relatively complex system which is undesirable.

### SUMMARY OF THE INVENTION

In accordance with the present invention, we provide a communications system, comprising a plurality of communications networks and roaming means for facilitating roaming to users on said plurality of communications networks, characterized in that the plurality of communications networks includes a public land mobile network and a public switched telephone network, the roaming means are formed by a worldwide communications network, defined by a satellite network comprising a plurality of ground stations interlinked via satellites, the satellite network including a register for storing virtual network operator codes corresponding to networks that the satellite network has bilateral roaming agreements with; the satellite network being adapted to receive from one of said networks an IMSI number identification code from a mobile terminal, the IMSI number including a country code, a network operator code of the wireless device, a virtual network operator code assigned by the satellite network, and a subscriber identity, determine whether the said network is within the list of networks as maintained in the register, exchange, contingent upon a positive result, information between the said network and a home network of the mobile terminal, and accept the mobile terminal for roaming on the said network.

To this end, the invention provides for operators of telecommunications networks, i.e., PLMNs or PSTNs, to each conclude a bilateral roaming agreement with a global communications network - to which a satellite-communications network (= SCN) is particularly suited - and that in doing so the technical means are provided for realizing said agreement. By way of only one agreement, namely, by the SCN, each PLMN or PSTNL as the case may be, receives roaming facilities with all other PLME and PSTNs which have also concluded such an agreement with the SCN. The telecommunications network concluding an agreement with the SCN should, for the purpose of realising said agreement, bring about a signalling coupling with the SCN. The SCN then provides signalling links with all telecommunications networks with which a roaming agreement has been concluded as well. There is therefore required only one signalling link with the SCN to obtain, roaming with all networks connected to the SCN. The invention is based on the insight that an SCN, apart from as a platform for satellite communication, due to its far-reaching global setup and arrangement, is extremely suitable as a roaming platform ("facilitator") for different PLMNs and PSTNs.

An example of a communications system according to the invention will now be described with reference to the accompanying drawings, and contrasted with the prior art, in which:-
Figure 1 is a schematic diagram of a known communication network;
Figure 2 is a diagram similar to Figure 1 but of an example of the invention;
Figure 3 is a schematic view of a communications system according to the invention in more detail; and,
Figure 4 is a schematic view of a SIM card.

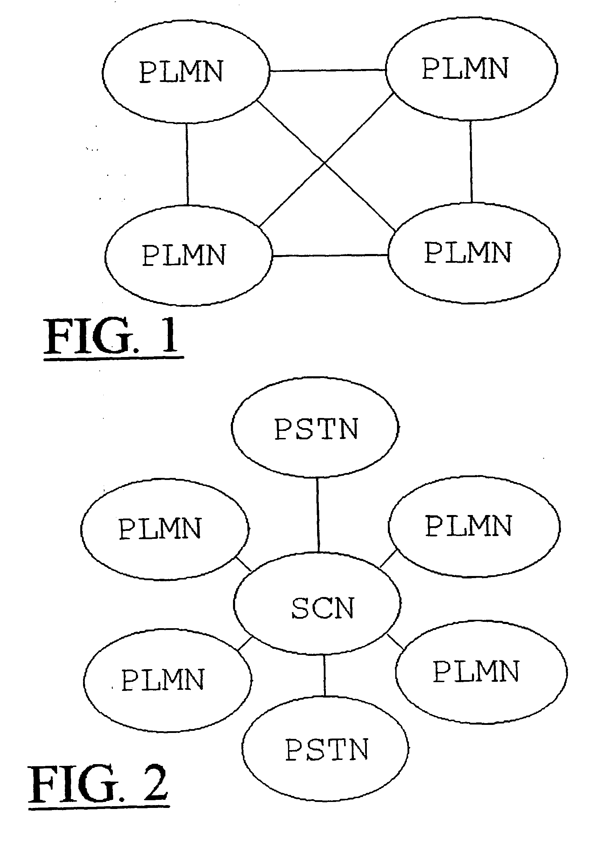

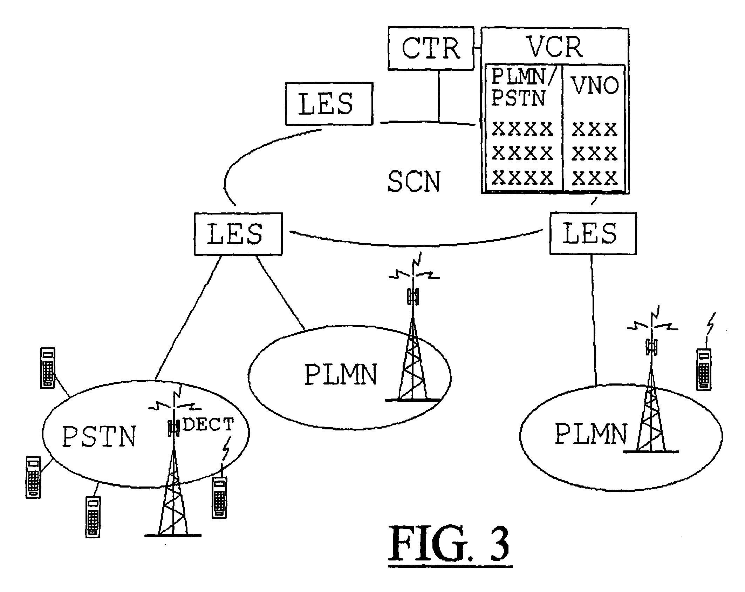

The enclosed figures provide an illustration of the invention. FIG. 1 shows the state of the art, in which several PLMNs conclude agreements with one another, and establish signalling channels and control modules for realising roaming facilities for the subscribers of said several PLANS. FIG. 2 shows the architecture according to the invention, PLMNs and also PSTNs realising roaming facilities by way of a Satellite-Communications Network (= SCN) which is used here as a common roaming platform (facilitator). FIG. 3 shows a further elaboration of FIG. 2. An SCN connects several Land Earth Stations (= LESs) to one another. These are the earth stations for satellite communication. The satellites with which said earth stations are communicating have not been drawn since said satellites per se have no function in the system according to the present invention. In conformity with the invention, the SCN - apart from the standard function of facilitating communication by way of satellites - accomplishes the function of facilitating roaming for subscribers who have entirety different operator networks, PSTNs and PLMNs, as their home network, in other worlds, to which they are subscribing. In conformity with the invention, operators of different PLMNs or PBTNs each conclude a bilateral roaming agreement with the SCN. The technical means for realising said agreements between the several PLMNs and PSTNs, respectively, and the SCN, comprise a register, the Virtual Network Operator Code Register VCR, which is located within the SCN, and may be approached under control of a control module CTR.

The VCR may consist of one register, which may be approached and interrogated by the several LESs; if so desired, each LES may be provided with a copy VCR - to be continuously kept up to date having (distributed) control means (CTRs). By way of one agreements with the SCN, technically to be realised by assigning, to the PLMN or PSTN, a VNO code (= VNC) and entering said VNC into the VCR, each PLMN or PSTN, respectively, entered into the VCR obtains roaming facilities with all other PLMNs and PSTNs entered into the VCR. Upon entry into the VCR, there is also realised - under control of the control module CTR - a signalling coupling (interface) between the PLMN and PSTN entered, respectively, and the SCN. By way of the SCN, all entered PLANS and PSTNs are then capable of exchanging signalling traffic - in this case, roaming information - with one another. This way, the SCN is used, apart from as a platform for satellite communication, by way of the VCR and the signalling couplings corresponding thereto, as an interworking platform for facilitating roaming between the several PLMs and PSTNs

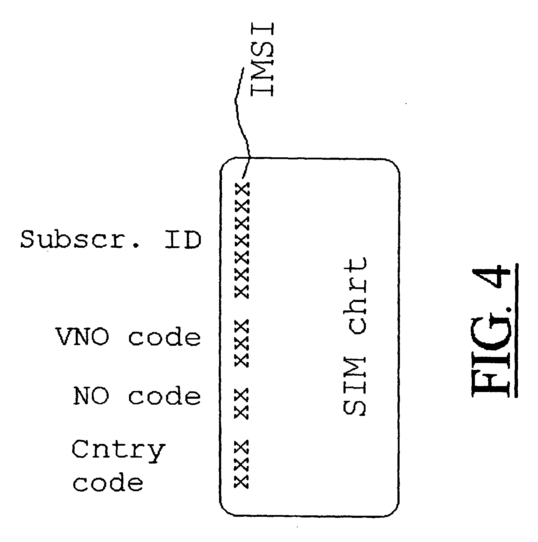

As indicated above, the system proposed by the invention makes use of SIM cards having an IMBI adjusted for roaming. Such a SIM card is shown in FIG. 4. Standard are the country and operator codes, five characters in all. The ten remaining character positions not laid down in standards, are used in the system according to the invention for laying down, inter alia, the VNO code (three characters) of the home PLMN or PSTN, respectively.

### IMPLEMENTATION

Below, the invention will be further explained by reference to several figures.

A calling user of a mobile terminal has a SIM card (SIM - Secure Identification Module) in which there is programmed an IMSI (= International Mobile Subscriber Identity). The IMSI consists of 15 positions, the first three of which standard denote the country of origin of the Network Operator (= NO) of the mobile user, the fourth and fifth denote the NO of the mobile user and the remaining ten positions may be freely completed by the NO. In the IMSI of users of an NO who - according to the invention - has concluded an agreement with the sCN, the first (three) digits of the field to be freely completed constitute a VNO code (VNO = Virtual Network Operator). Said VNO code is assigned, by a control module of the SCN, to each PLMN or PSTN with which the SCN, as may be seen from an entry into a VNO-code register (= VCR), has concluded a bilateral roaming agreement. It should be noted that a VNO is understood to mean an organisation managing a communications system having one or more network working elements (e.g., an HLR [= Home Location Register]) with which the VNO may add value to a base telecommunications service. In doing so, the WHO disposes, or not, of its own network (PLAN or PSTN) .

### PLMN subscribers roaming on a guest PLMN

When a (calling) user switches on his mobile terminal, a link is established between the mobile terminal and a VNO base station (in this case a PLMN) where the user wants to roam. In this case, the mobile terminal transmits the IMBI number of the SIM. The VNO network attempts to analyse at least the first 8 positions, in order to determine whether it concerns a home user (client of the own PLMN) or a roaming user (client of another PLMN) . If analysis on the first 8 positions is impossible, or it concerns a roaming user, it is determined, on the basis of the first 5 positions, whether a roaming agreement has been concluded between the PLMN and the SCN. If, according to the contents of the VCR, a roaming agreement does indeed exist, a request for information on the user is placed, by way of signalling, with the SCN, which carries out an analysis on the VNO code to determine to which VNO the request must be passed on. The VNO will make available the requested information, by way of signalling, to the satellite network, which passes it on to the guest PLAN. If the calling user is accepted by the guest PLMN, said information will be stored in the home PLMN in a Home Location Register (= HLR) and in the guest PLMN in a Visiting Location Register (= VLR). The costs of the communication by way of the PLMN are charged to the calling user by the home network.

Said procedures are in agreement with the current procedures laid down for roaming, and both said procedure and the means serving to carry them out are generally known.

### Roaming on nonmobile networks

A nonmobile network (PSTN) may also facilitate roaming of mobile users or clients of another PSTN, provided that said PSTN is extended with the option of being capable of identifying and recording users; to this end, it should dispose of several network elements, such as HLR, VLR, Authentication Centre, Extended memory. Identification is effected by means of the IMSI on a SIM card and peripheral equipment made suitable for this purpose in the PSTN or a cordless-identification option.

### PLMN- or PSTN-subscriber roaming on a PSTN

If a calling user ends up within the range of a transceiver station connected to a PSTN of a cordless system (e.g., a DECT [= Digital Enhanced Cordless Telecommunications]) and he disposes of a set wherein cordless communication is possible, he may make use of communication by way of the PSTN. Identification and communication between the PSTN and the SCN, and between the SCN and the home PLMN, is effected in accordance with the description above. The costs of the communication by way of the PSTN are charged to the calling user by the home network.

Due to the absence of a base station which determines the location of the roaming user (such as in the PLMN), the location of the roaming user on the PSTN is determined on the basis of the A-number (country code + network code + subscriber number) of the terminal to which the cordless transceiver station is connected. The user is accessible on the PSTN by way of his own (mobile) telephone number. *PSTN subscribers roaming on a PLMM or PSTN*

Wireline terminals may also make use of the aforementioned facilities. The terminal of a calling user does have to be provided with a SIM card identical to a SIM card for mobile terminals in PLMN networks. When the SIM card is inserted into a (public) terminal suitable for that purpose, identification and communication between the PSTN and the SCN, and between the SCN and the home PLMN or home PSTN, take place in accordance with the procedure described above. Due to the absence of a base station which determines the location of the roaming user (such as in the PLMN), the location of the roaming user on the PSTN is determined on the basis of the A number (country code + network code + subscriber number) of the terminal to which the (public) terminal is connected. The user is accessible on the wireline set (PSTN) by way of his own (mobile) telephone number.

The costs of the communication by way of the PSTN are charged to the calling user by the home PSTN or home PLMN.

## Claims

1. Communications system, comprising a plurality of communications networks and roaming means for facilitating roaming to users on said plurality of communications networks, **characterized in that** the plurality of communications networks includes a public land mobile network (PLMN) and a public switched telephone network (PSTN), the roaming means are formed by a worldwide communications network, defined by a satellite network (SCN) comprising a plurality of ground stations (LES) interlinked via satellites, the satellite network including a register (VCR) for storing virtual network operator codes (VNO) corresponding to networks that the satellite network has bilateral roaming agreements with; the satellite network (SCN) being adapted to receive from one of said networks an IMSI number identification code from a mobile terminal, the IMSI number including a country code, a network operator code of the wireless device, a virtual network operator code assigned by the satellite network, and a subscriber identity, determine whether the said network is within the list of networks as maintained in the register, exchange, contingent upon a positive result, information between the said network and a home network of the mobile terminal, and accept the mobile terminal for roaming on the said network.

2. Communications system according to claim 1, **characterized in that** terminals of the subscribers to the communications networks (PLMN,PSTN) comprise an identification module (SIM) for reading in and passing on, to the communications system, the identification code (IMSI).

3. Communications system according to claim 1 or claim 2, **characterized in that** the worldwide communications network (SCN) determines the location of a roaming user on a wireline network (PSTN) on the basis of the A-number of the terminal to which the terminal on the network is connected.

4. Communications system according to claim 3, wherein the roaming user is accessible on the PSTN by way of his own terminal number.

## Patentansprüche

1. Kommunikationssystem, das eine Mehrzahl von Kommunikationsnetzen und Roamingmittel umfasst, um Benutzern das Roaming auf besagter Mehrzahl von Kommunikationsnetzen zu erleichtern, **dadurch gekennzeichnet, dass** die Mehrzahl der Kommunikationsnetze ein öffentliches Landfunknetz (PLMN) und ein öffentliches Telefonwählnetz (PSTN) einschließt, wobei die Roamingmittel durch ein weltweites Kommunikationsnetz gebildet sind, das durch ein Satellitennetz (SCN) definiert ist, das eine Mehrzahl von Bodenstationen (LES) umfasst, die über Satelliten miteinander verbunden sind, wobei das Satellitennetz ein Register (VCR) zum Speichern virtueller Netzbetreibercode (VNO) einschließt, die Netzen entsprechen, mit denen das Satellitennetz bilaterale Roamingvereinbarungen hat; wobei das Satellitennetz (SCN) adaptiert ist, von einem der besagten Netze einen IMSI-Nummer-Identifizierungscode (Internationalen Funkkennungs-Identifizierungscode) von einem Mobilendgerät zu empfangen, wobei die IMSI-Nummer einschließlich einer Landeskennzahl, eines Netzbetreibercodes des drahtlosen Geräts, einen vom Satellitennetz zugeordneten virtuellen Netzbetreibercode und einer Teilnehmeridentität, um zu ermitteln, ob sich besagtes Netz in der Liste von Netzen befindet, wie sie im Register aufrechterhalten wird und abhängig von einem positiven Ergebnis, Information zwischen dem besagten Netz und einem Heimnetz des Mobilendgeräts austauschen und das Mobilendgerät für Roaming auf dem besagten Netz akzeptieren.

2. Kommunikationssystem nach Anspruch 1, **dadurch gekennzeichnet, dass** Endgeräte der Teilnehmer an den Kommunikationsnetzen (PLMN, PSTN) ein Identifikationsmodul (SIM) zum Einlesen und Weiterleiten des Identifikationscodes (IMSI) an das Kommunikationssystem umfassen.

3. Kommunikationssystem nach Anspruch 1 oder Anspruch 2, **dadurch gekennzeichnet, dass** das weltweite Kommunikationsnetz (SCN) den Standort eines Roamingbenutzers auf einem Leitungsnetz (PSTN) auf der Basis der A-Nummer des Endgeräts ermittelt, an die das Endgerät auf dem Netz angeschlossen ist.

4. Kommunikationssystem nach Anspruch 3, wobei Zugriff auf den Roamingbenutzer auf dem Leitungsnetz (PSTN) mittels seiner eigenen Endgerätnummer möglich ist.

## Revendications

1. Système de communications, comprenant une pluralité de réseaux de communications et de moyens d'itinérance pour faciliter l'itinérance aux utilisateurs sur ladite pluralité de réseaux de communications, **caractérisé en ce que** la pluralité de réseaux de communications comprend un réseau mobile terrestre public (RMTP) et un réseau téléphonique public commuté (RTPC), les moyens d'itinérance sont formés par un réseau de communications mondial, défini par un réseau satellitaire (SCN) comprenant une pluralité de stations terriennes (LES) interconnectées au moyen de satellites, ce réseau satellitaire comprenant un registre (VCR) pour stocker des codes opérateurs de réseau virtuel (VNO) correspondant à des réseaux avec lesquels le réseau satellitaire a des accords d'itinérance ; le réseau satellitaire (SCN) étant adapté de façon à recevoir d'un desdits réseaux un code d'identification de numéro IMSI venant d'un terminal mobile, ce numéro IMSI comprenant un indicatif de pays, un code opérateur de réseau du dispositif sans fil, un code opérateur de réseau virtuel attribué par le réseau satellitaire, et une identité d'abonné, à déterminer si ledit réseau est dans la liste de réseaux maintenue dans le registre, à échanger, sous réserve de résultat positif, une information entre ledit réseau et un réseau domestique du terminal mobile, et à accepter le terminal mobile pour une itinérance sur ledit réseau.

2. Système de communications selon la revendication 1, **caractérisé en ce que** les terminaux des abonnés aux réseaux de communications (RMTP, RTPC) comprennent un module d'identification (SIM) pour lire et transmettre le code d'identification (IMSI) au système de communications.

3. Système de communications selon la revendication 1 ou la revendication 2, **caractérisé en ce que** le réseau de communications mondial (SCN) détermine l'emplacement d'un utilisateur itinérant sur un réseau sans fil (RTPC) en se basant sur le numéro A du terminal auquel est connecté le terminal sur le réseau.

4. Système de communications selon la revendication 3, dans lequel l'utilisateur itinérant est accessible sur le RTPC au moyen de son propre numéro de terminal.
